# EUROPEAN PATENT APPLICATION

(11) **EP 2 071 697 A2**
(43) Date of publication of application: **17.06.2009**
(21) Application number: 08021468.7
(22) Date of filing: 10.12.2008
(51) Int. Cl.: H02J 7/14

(54) **Battery-charging method and battery-charging apparatus**

(30) Priority: 14.12.2007 JP 2007322745
(71) Applicant: Mazda Motor Corporation, Fuchu-cho Aki-gun Hiroshima 730-8670 (JP)
(72) Inventor: Saito, Kohei, Hiroshima 730-8670 (JP)
(74) Representative: Müller-Boré & Partner Patentanwälte

(57) **Abstract**

Disclosed is a battery-charging method and apparatus which is designed to improve charging efficiency during charging of a battery using an external power source, without increasing the number of components. The battery-charging method of the present invention comprises the steps of: forming an electric circuit which includes: an alternating-current generator operable to output alternating current, and an external power source; a diode rectifier operable to rectify the alternating current output from the alternating-current generator into a direct current by a diode; and a battery which is chargeable using an output of the alternating-current generator, which are serially connected in this order; and supplying an alternating current fed from the external power source, between the alternating-current generator and the diode rectifier (S4, S1, S5).

## Description

### BACKGROUND OF THE INVENTION

### 1. Field of the Invention

The present invention relates to a battery-charging method and apparatus in an electric circuit comprising an alternating-current generator, a diode rectifier and a battery which are serially connected in this order.

### 2. Description of the Related Art

Heretofore, in an apparatus for charging a battery which serves as an electric storage device, there has been known one type adapted to allow charging of the battery in such a manner as to connect an external power source to the battery through an inverter. This configuration is employed because a battery is generally designed to handle a direct current, and wherein an alternating current fed from the external electric power source is converted to a direct current by the inverter, and the direct current is supplied to the battery.

Recent years, the above type of battery-charging apparatus has been applied to a power supply system for hybrid vehicles. For example, JP 2007-099223A (hereinafter referred to as "Patent Document 1") discloses a so-called hybrid vehicle equipped with an internal combustion engine, and a motor adapted to generate a vehicle driving force using electric power charged in a battery to serve as an additional driving source, wherein an inverter is employed to allow charging of the battery using an external power source.

In terms of how to convert an alternating current to a direct current, it is known that an approach using a rectifying action of a diode rectifier is more effective in improvement of charging efficiency than that using an inverter.

However, an approach of providing a diode rectifier in a power supply system only for charging to a battery involves a problem about undesirable effects on layout, because it leads to increase in the number of components and consequently to increase in size of an electronic packaging substrate.

The present invention is directed to providing a battery-charging method and apparatus capable of improving charging efficiency during charging of a battery using an external power source, without increasing the number of components.

### SUMMARY OF THE INVENTION

The present invention provides a battery-charging method which comprises the steps of:
forming an electric circuit which includes: an alternating-current generator operable to output an alternating current; a diode rectifier operable to rectify the alternating current output from the alternating-current generator into a direct current by a diode; and a battery which is chargeable using an output of the alternating-current generator, wherein the alternating-current generator, the diode rectifier and the battery are serially connected in this order; and supplying an alternating current fed from the external power source, between the alternating-current generator and the diode rectifier.

In the battery-charging method of the present invention, an alternating current fed from the external power source is supplied between the alternating-current generator and the diode rectifier. Thus, the diode rectifier for rectifying an alternating current output from the alternating-current generator can be additionally used for rectifying the alternating current fed from the external power source to convert the alternating current to a direct current.

This makes it possible to charge the battery using the external power source without increasing the number of components only for charging of the battery, and effectively improve battery charging efficiency based on the use of the diode rectifier.

These and other objects, features and advantages of the present invention will become more apparent upon reading the following detailed description along with the accompanying drawings.

### BRIEF DESCRIPTION OF THE DRAWINGS

FIG. 1 is a schematic block diagram showing a hybrid vehicle equipped with a battery-charging system according to a first embodiment of the present invention.
FIG. 2 is a schematic diagram showing an electric circuit of the battery-charging system in FIG. 1.
FIG 3 is a block diagram showing a control system of the hybrid vehicle in FIG. 1.
FIG. 4 is a flowchart showing one example of a control process of charging a battery.
FIG. 5 is an explanatory diagram showing a current flow in the electric circuit during charging of the battery using an external power source.
FIG. 6 is an explanatory diagram showing the electric circuit in a state when the external power source is disconnected from an external-power-source socket.
FIG. 7 is a schematic block diagram showing a hybrid vehicle equipped with a battery-charging system according to a second embodiment of the present invention.
FIG. 8 is a flowchart showing one example of a battery charging control process.
FIG. 9 is an explanatory diagram of a current flow in an electric circuit during battery charging using an external power source.

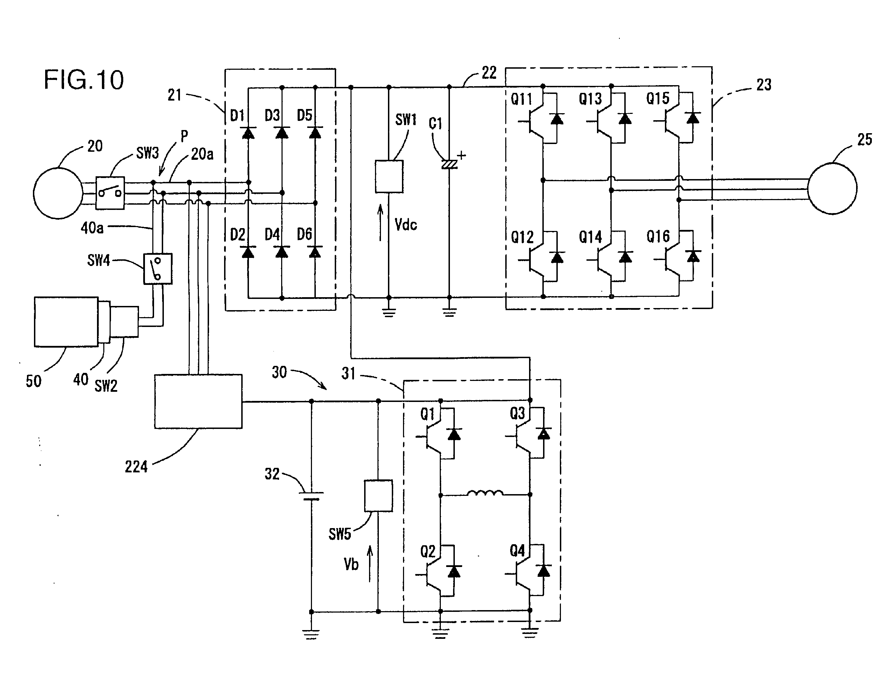

FIG. 10 is a schematic diagram showing an electric circuit of a battery-charging system used in a hybrid vehicle, according to a fourth embodiment of the present invention.
FIG. 11 is a schematic diagram showing an electric circuit of a battery-charging system used in a wind turbine generator system, according to a fifth embodiment of the present invention.

### DESCRIPTION OF THE PREFERRED EMBODIMENTS

With reference to the drawings, the present invention will now be specifically described based on an embodiment thereof.

### [FIRST EMBODIMENT]

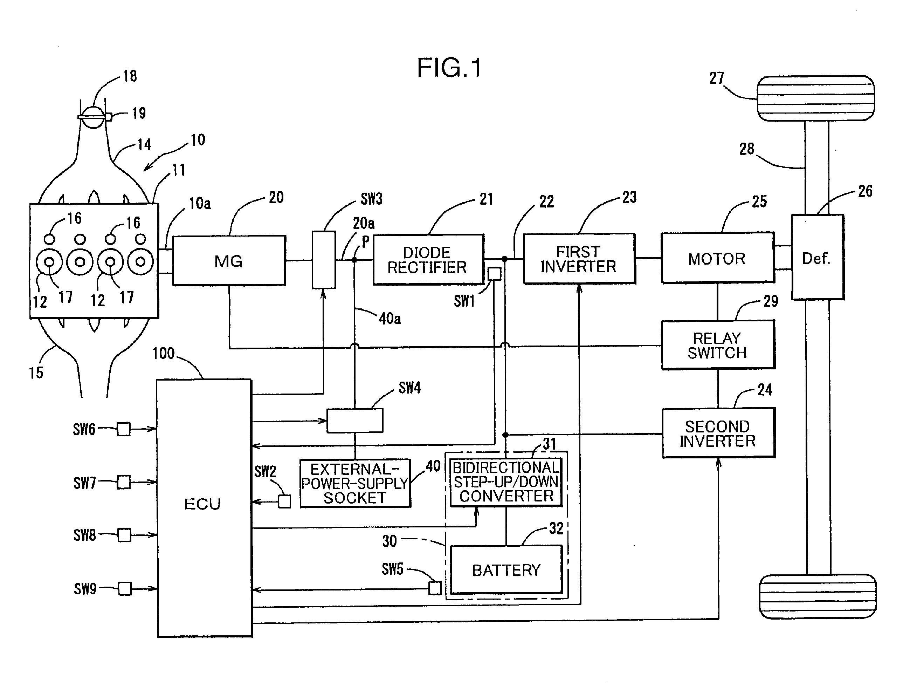

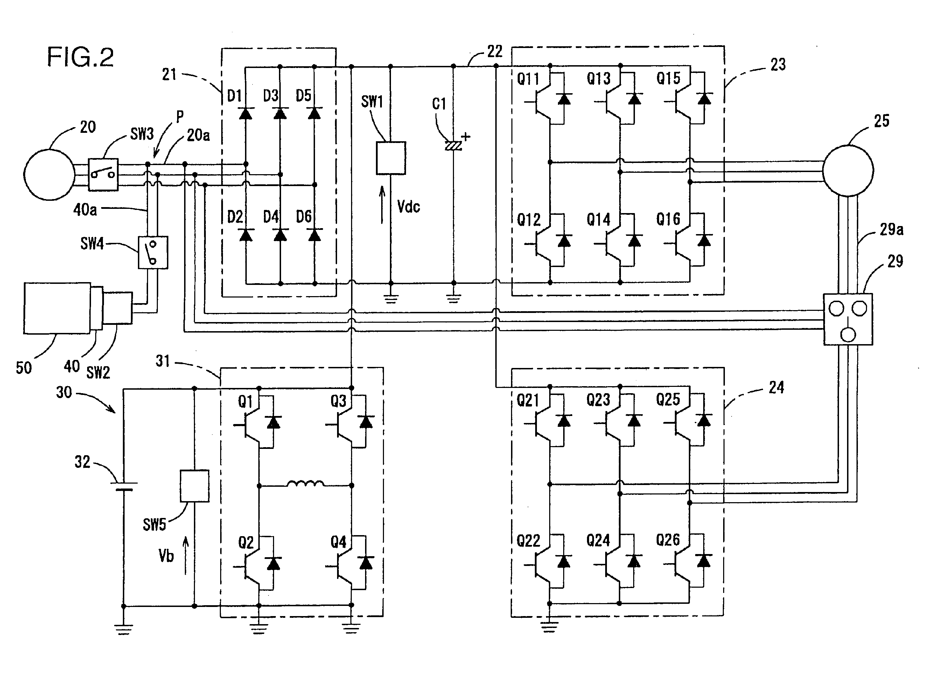

With reference to FIGS. 1 to 6, a first embodiment of the present invention will be described. FIG. 1 is a schematic block diagram showing a hybrid vehicle equipped with a battery-charging system according to the first embodiment, and FIG. 2 is a schematic diagram showing an electric circuit of the battery-charging system. As shown in FIG. 2, the hybrid vehicle in the first embodiment is a series hybrid vehicle comprising an engine 10, and a motor/generator 20 adapted to be driven by the engine 10.

The series hybrid vehicle means a vehicle designed such that a generator is driven by an engine to supply electric power to a motor therefrom, and a driving wheels are driven by the motor, as disclosed, for example, JP 2005-204370A. Differently from a parallel hybrid vehicle, in the series hybrid vehicle, the engine is used solely for generating electric power, and a driving force generated by an engine is not mechanically transferred to driving wheels.

For example, the engine 10 is a multi-cylinder four-cycle gasoline engine which comprises an engine body 11 including a cylinder head and a cylinder block as main components, four in-line cylinders 12 formed in the engine body 11, an intake manifold 14 for introducing fresh air into the cylinders 12, and an exhaust manifold 15 for discharging burnt gas from the cylinders 12.

In the engine body 11, each of the cylinders 12 is provided with a fuel injection valve 16 and an ignition plug 17. Further, each of the cylinders 12 has a piston (not shown) adapted to be moved upwardly and downwardly to drive a crankshaft 10a connected thereto. A common intake passage disposed upstream of the intake manifold 14 is provided with a throttle valve 18 for adjusting an amount of fresh air, wherein the throttle valve 18 is adapted to be driven by an actuator 19 installed in a throttle body.

As shown in FIGS. 1 and 2, the motor/generator 20 is a multi-phase electric motor/generator, for example, a three-phase electric motor/generator, which is operable to generate an alternating current when it is driven by the engine 10, and further serve as a starter motor for the engine 10 when it is supplied with an alternating current.

The motor/generator 20 is connected to a diode rectifier 21. The diode rectifier 21 includes plural sets of diodes D1 to D6, wherein the number of sets corresponds to the number n of phases of the motor/generator 20. The diode rectifier 21 has an output terminal connected to a DC bus line 22 serving as a power supply line.

A smoothing condenser C1 is connected to the DC bus line 22. Further, a DC-bus-line voltage sensor SW1 is connected to the DC bus line 22 to detect a voltage of the DC bus line 22.

In the first embodiment, first and second inverters 23, 24 are connected in parallel to the DC bus line 22, to convert a direct current to an alternating current. The first inverter 23 and the second inverter 24 have plural sets of elements Q11 to Q16 and plural sets of elements Q21 to Q26, respectively, wherein the number of sets in each of the first and second inverters 23, 24 corresponds to the number of phases of a multi-phase motor 25 each serving as a load. For example, each of the elements Q11 to Q16, Q21 to Q26 is composed of a transistor and a diode.

The first inverter 23 is connected to a motor 25 adapted to be driven by an alternating current supplied thereto. The motor 25 is connected to a differential mechanism 26 of the hybrid vehicle, and operable to drive an axle of rear wheels of the hybrid vehicle through the differential mechanism 26. In the first embodiment, the motor 25 is adapted to additionally serve as a battery-regenerating generator.

The second inverter 24 is connected to a relay switch 29 serving as switching means. The relay switch 29 is located at a connecting node of a normal-operation power supply line 29a for connecting the second inverter 24 to the motor/generator 20, and a starter-operation power supply line 29b for connecting the second inverter 24 to the motor 25, and adapted to selectively connect the second inverter 24 to either one of the two lines 29a, 29b.

Thus, the second inverter 24 is operable, depending on a vehicle-driving state, to supply an alternating current to the motor 25 together with the first inverter 23, or supply an alternating current to the motor/generator 20 to drive the engine 10 during start-up.

Further, a power supply unit 30 is connected to the DC bus line 22. The power supply unit 30 comprises a bidirectional step-up/down converter 31 as a DC-DC converter, and a battery 32 connected to the bidirectional step-up/down converter 31.

The bidirectional step-up/down converter 31 comprises two step-down elements Q1, Q2, two step-up elements Q2, Q4, and a reactor L.

Each of the elements Q1 to Q4 includes a transistor. For example, each of these elements Q1 to Q4 and the above elements Q11 to 16, Q21 to Q26 may be composed of a bipolar transistor, a MOSFET (Metal-Oxide Semiconductor Field-Effect Transistor), or an IGBT (Insulated Gate Bipolar Transistor), which serves as a switching element.

In the bidirectional step-up/down converter 31, for example, under a condition that the transistor of the element Q1 is maintained in its ON state, and each of the transistors of the elements Q2, Q3 is maintained in its OFF state, the transistor of the element Q4 can be turned on and off at a given timing to allow a current to flow in a direction from the battery 32 to the DC bus line 22 while stepping up a voltage on the side of the DC bus line 22. Under a condition that the transistor of each of the elements Q2 to Q4 is maintained in its OFF state, the transistor of the element Q1 can be turned on and off at a given timing to allow a current to flow in a direction from the battery 32 to the DC bus line 22 while stepping down the voltage on the side of the DC bus line 22. Further, under a condition that the transistor of the element Q3 is maintained in its ON state, and each of the transistors of the elements Q1, Q4 is maintained in its OFF state, the transistor of the element Q2 can be turned on and off at a given timing to allow a current to flow in a direction from the DC bus line 22 to the battery 32 while stepping up a voltage on the side of the battery 32. Under a condition that the transistor of each of the elements Q1, Q2, Q4 is maintained in its OFF state, the transistor of the element Q3 can be turned on and off at a given timing to allow a current to flow in a direction from the DC bus line 22 to the battery 32 while stepping down the voltage on the side of the battery 32.

In the first embodiment, as shown in FIGS. 1 and 2, a power supply line 40a is branched from the power supply line 20a at a node P between the motor/generator 20 and the diode rectifier 21, and an external-power-source socket 40 (hereinafter referred to simply as "socket 40") is connected to the node P through the power supply line 40a. This socket 40 is adapted to allow an external power source 50, e.g., 100 (V) commercial alternating-current (AC) power source unit, to be connected thereto. This socket 40 is provided with an external-power-source connection sensor SW2 for detecting whether the external power source 50 is connected to the socket 40.

For example, the external-power-source connection sensor SW2 is composed as a voltage detection sensor operable to detect a terminal voltage of the socket 40. Specifically, if the external power source 50 is connected to the socket 40, the terminal voltage of the socket 40 will have the same value as that of a voltage of the external power source 50. Thus, based on this detection signal, it can be determined that external power source 50 is connected to the socket 40.

Further, a first switch SW3 is interposed in the power supply line 20a to switchingly connect and disconnect a connection between the motor/generator 20 and the node P, and a second switch SW4 is interposed in the power supply line 40a to switchingly connect and disconnect a connection between the socket 40 and the diode rectifier 21.

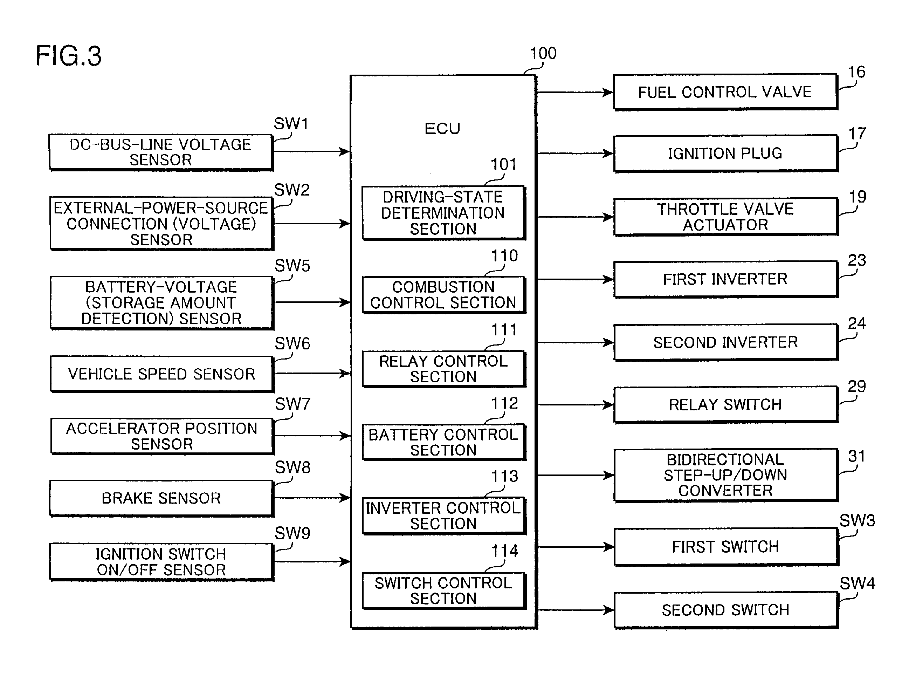

FIG. 3 is a block diagram showing a control system of the hybrid vehicle in FIG. 1. The hybrid vehicle is controlled by a control unit (ECU) 100 as shown in FIG. 3, which also serves as control means for the battery-charging system according to the first embodiment.

The control unit 100 is a microprocessor comprising a CPU and a memory, and operable to read a detection signal from an input element to perform a given processing, and output a control signal to an output element, according to a program module. In the illustrated example, the control unit 1 is shown as a single unit. In a specific aspect, the control means may be a module assembly formed by assembling a plurality of units together.

The input element associated with the control unit 100 includes the DC-bus-line voltage sensor SW1, the external-power-source connection sensor SW2, a battery-voltage sensor SW5, a vehicle speed sensor SW6, an accelerator position sensor SW7, a brake sensor SW8 and an ignition switch ON/OFF sensor SW9.

The output element associated with the control unit 100 includes the fuel control valve 16, the ignition plug 17, the throttle valve actuator 19, the first and second inverter 23, 24, the relay switch 29, the bidirectional step-up/down converter 31 and the first and second switches SW3, SW4. Although not specifically illustrated, various other sensors installed in the engine 10 (a coolant temperature sensor, a crank angle sensor, a throttle opening sensor, etc.) are also connected to the control unit 100 to control combustion of the engine 20.

In the illustrated example, the control unit 100 comprises, in a logical configuration, a driving-state determination section 101, a combustion control section 110 operable to perform an operation control of the engine 10, a relay control section 111 operable to perform a power supply control based on a control of the relay switch 29, a battery control section 112 operable to control the bidirectional step-up/down converter 31, an inverter control section 113, and a switch control section 114 operable to control the first and second switches SW3, SW4.

The driving-state determination section 101 is designed to determine a vehicle-driving state, based on respective detection signals of the sensor SW1 to SW9. In the first embodiment, the driving-state determination section 101 also has a function of determining a presence or absence of an engine-starting request, i.e., a driver's request for starting up the engine 10 of the hybrid vehicle.

The combustion control section 110 is configured to control the fuel injection valves 16, the ignition plugs 17 and the throttle valve actuator 19 so as to control a rotational speed of the engine 10 to control a rotational speed of the motor/generator 20.

The relay control section 111 is designed to switchingly control the relay switch 29, based on a determination result of the driving-state determination section 101, to switch the relay switch 29 between a motor power-supply mode where the second inverter 24 is connected to the motor 25 through the normal-operation power supply line 29a, and a starter power-supply mode where the second inverter 24 is connected to the motor/generator 20 through the starter-operation power supply line 29b to drive the motor/generator 20 as a motor to start up the engine 10.

In a normal state, the battery control section 112 serves as a means to, based on an output of the battery voltage sensor SW5, maintain an output current from the battery 32 at a constant value during the use of the power supply unit 30, and to prevent the occurrence of overcurrent during a battery regenerating operation.

The battery control section 112 is operable, during charging of the battery 32, to determine a magnitude relationship between a voltage value Vdc (see FIG. 2) detected by the DC-bus-line voltage sensor SW1, and a voltage value Vb (see FIG. 2) detected by the battery voltage sensor SW5. Then, the battery control section 112 is operable, when the determination is Vdc < Vb, to turn on and off the transistor of the element Q2 at a given timing, under a condition that the transistor of the element Q3 is maintained in the ON state, and each of the transistors of the elements Q1, Q4 is maintained in the OFF state.

In this case, even if a voltage on the side of the DC bus line 22 is relatively low, a direct-current voltage on the side of the DC bus line 22 can be stepped up by the bidirectional step-up/down converter 31 under the control of the battery control section 112, to allow a current to flow toward the battery 32 so as to charge the battery 32.

The inverter control section 113 is designed to control an ON/OFF operation of each of the first and second inverters 23, 24, based on a determination result of the driving-state determination section 101, to optimally control a loading state in each of the inverters 23, 24, depending on the target load to be supplied with electric power.

The switch control section 114 is designed to control an ON/OFF operation of each of the first and second switches SW3, SW4, based on a detection signal from the external-power-source connection sensor SW2.

The control unit 100 is operable, based on a determination result of the driving-state determination section 101, to control the engine 10, the motor/generator 20, the first and second inverters 23, 24, the motor 25, the relay switch 29 and the bidirectional step-up/down converter 31. According to this control, in a specific vehicle-driving range, such as vehicle-starting or low-torque vehicle-driving range, the relay switch 29 is switched to allow the second inverter 23 to be connected to the motor 25 so as to supply electric power of the battery 32 to the motor 25 via the first and second inverters 23, 24 to drive the hybrid vehicle based on the electric power supplied from the battery 32.

In a vehicle-driving range requiring an intermediate/high torque, the relay control section 111 is operable to switch the relay switch 29 from the motor power-supply mode to the starter power-supply mode so as to start up the engine 10 to allow the motor/generator 20 to be used as a generator. Then, after the start-up of the engine 10, the motor 25 is driven by a current supplied from the motor/generator 20, mainly via the first inverter 23.

The driving-state determination section 101 is operable to determine a presence or absence of a request for starting up the engine 10, based on detection signals of the input elements including the battery-voltage sensor SW5, the vehicle speed sensor SW6, the accelerator position sensor SW7, the brake sensor SW8 and the ignition switch ON/OFF sensor SW9. Specifically, when an accelerator pedal is depressed without depressing a brake pedal, i.e., a vehicle-driving range requiring an intermediate/high torque load is detected, it is determined that the engine-starting request is made.

If it is determined that the engine-starting request is made, the second inverter 24 is turned off. Then, the relay control section 111 is operable to switch the relay switch 29 to the starter power-supply mode (where the second inverter 24 is connected to the motor/generator 20) to allow the second inverter 24 to be connected to the motor/generator 20.

When the relay switch 29 is in the starter power-supply mode, or switched to the starter power-supply mode, the battery control section 112 is operable to execute a step-up operation of the bidirectional step-up/down converter 31, and simultaneously the inverter control section 113 is operable to turn on both the first and second inverter 24.

Thus, a current from the power supply unit 30 is supplied to the first and second inverters 23, 24 through the DC bus line 22. Thus, a driving current for driving the motor 25 is supplied from the first inverter 23, and a driving current for driving the motor/generator 20 is supplied from the second inverter 24.

Consequently, the motor/generator 20 serves as a motor to drive the crankshaft 10a of the engine 10 to start up the engine 10, and concurrently the motor 25 is driven to drive the hybrid vehicle. As above, in the first embodiment, the plurality of inverters 23, 24 are employed to allow both an engine-starting operation and a vehicle-driving operation to be concurrently performed based, respectively, on the motor/generator 20 and the motor 25.

When the engine 10 is driven, and a rotational speed Ne of the motor/generator 20 (or an engine speed) reaches a start-operation speed N1, the control unit 100 is operable to control an amount of current to be supplied to the motor/generator 20 in such a manner that the rotational speed Ne of the motor/generator 20 is maintained at the start-operation speed N1. Specifically, the amount of current is controlled in such a manner that the switching operation of the bidirectional step-up/down converter 31 is controlled by the battery control section 113, and the second inverter 24 is controlled by the inverter control section 113.

Subsequently, the combustion control section 110 is operable to control an intake pressure, a fuel injection timing and an ignition timing based on a conventional engine control scheme to execute a combustion control of the engine 10.

Then, when the rotational speed Ne of the motor/generator 20 reaches a given start-up speed N2 or more, the inverter control section 113 is operable to turn off the second inverter 24 once to complete a cranking operation.

Then, when the current supply is stopped, the relay control section 111 is operable to switch the relay switch 29 to the motor power-supply mode (where the second inverter 24 is connected to the motor 25). Then, a control routine of the control unit 100 is shifted to a normal operation mode to control the ON/OFF operation of each of the first and second inverters 23, 24, and the switching operation of the bidirectional step-up/down converter 31.

In the first embodiment, even after the relay switch 29 is switched to the motor power-supply mode, the second inverter 24 can be turned on/off depending on the vehicle-driving state to improve the efficiency of the first inverter 23 itself and the efficiency of the power supply system as a whole.

As described above, the battery-charging according to the first embodiment is provided with the second inverter 24, the relay switch 29, and the starter-operation power supply line 29a capable of directly connecting the second inverter 24 and the motor/generator 20. This makes it possible to eliminate a need for supplying a driving current from the power supply unit 30 (battery 32) to the motor/generator 20 through the DC bus line 22, in a reverse direction (which is opposite to a normal direction for supplying a current in the following order: the motor/generator 20 → the diode rectifier 21 → the first and second inverters 23, 24 → the motor 25).

Thus, in the first embodiment, the diode rectifier 21 connected to the motor/generator 20 adapted to be driven by the engine 10 can rectify only a current supplied in the normal direction. This makes it possible to rectify an alternating current output from the motor/generator 20 into a direct current by the diodes D1 to D6 of the diode rectifier 21 so as to enhance power generation efficiency in a power generation system while reducing loss in a power supply system.

The battery-charging system according to the first embodiment is designed such that the external power source 50 is connected to the socket 40 to charge the battery 32, in addition to charging of the battery 32 using an output of the motor/generator 20.

In the first embodiment, during the charging of the battery 32 using the external power source 50, an alternating current from the external power source 50 is supplied to a node between the motor/generator 20 and the diode rectifier 21 through the power supply line 40a.

Thus, the diode rectifier 21 for rectifying an alternating current output from the motor/generator 20 can also be used for rectifying an alternating current fed from the external power source 50 and converting the alternating current into a direct current.

This makes it possible to charge the battery 32 using the external power source 50 without increasing the number of components only for the charging of the battery 32, and facilitate improvement in charging efficiency of the battery 32 based on the use of the diode rectifier 21.

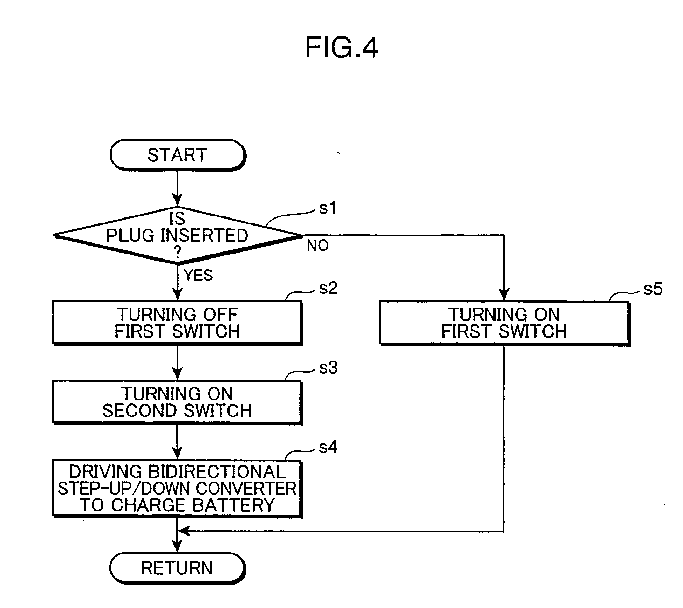

With reference to FIG 4, one example of a control process of charging the battery 32 will be described below. FIG. 4 is a flowchart showing one example of the control process of charging the battery 32.

Firstly, the switch control section 114 determines whether a terminal (plug; not shown) of the external power source 50 is inserted into (connected to) the socket 40, using the external-power-source connection sensor SW2 (Step S1).

In Step S1, a voltage of the external power source 50 is detected by the external-power-source connection sensor SW2. If the switch control section 114 determines that the external power source 50 is inserted into (connected to) the socket 40, based a detection signal from the external-power-source connection sensor SW2 (YES in Step S1), the control routine advances to Step S2. In Step S2, the switch control section 114 turns off the first switch SW3, and the control routine advances to Step S3. In Step S3, the switch control section 114 turns on the second switch SW4,

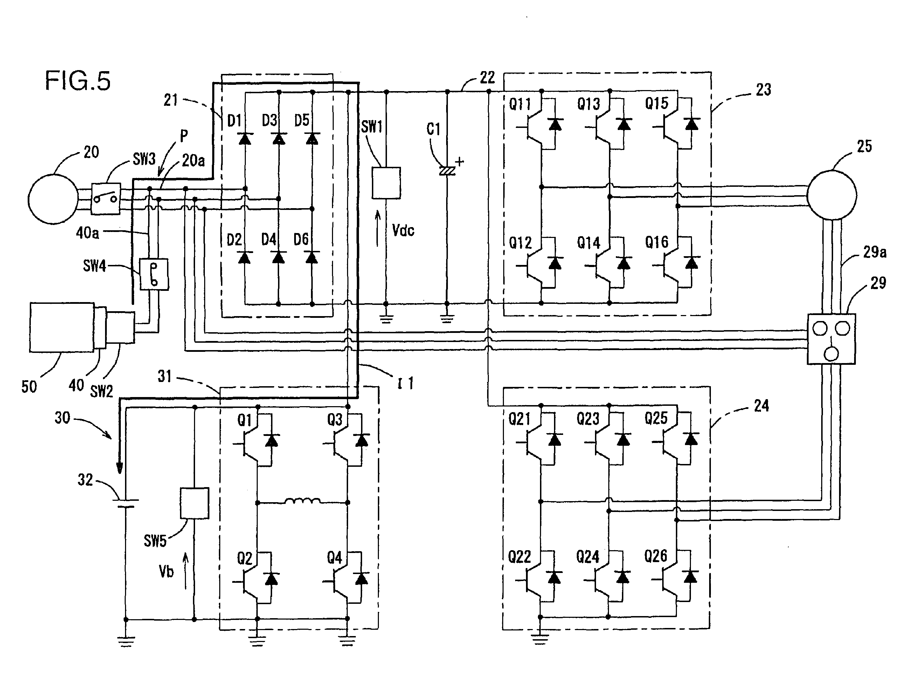

Concurrently, based on a magnitude relationship between the voltage value Vdc and the voltage value Vb in a state after the alternating current fed from the external power source 50 is rectified by the diode rectifier 21, the battery control section 112 controls the bidirectional step-up/down converter 31 to appropriately step up or down a direct-current voltage resulting from rectifying the alternating current fed from the external power source 50 by the diode rectifier 21. Thus, the current fed from the external power source 50 is supplied to the battery 32 via the second switch SW4, the diode rectifier 21 and the bidirectional step-up/down converter 31, as indicated by the arrowed line 11 in FIG. 5, to perform a charging operation (Step S4). After completion of the charging operation, the control routine is returned to a main routine.

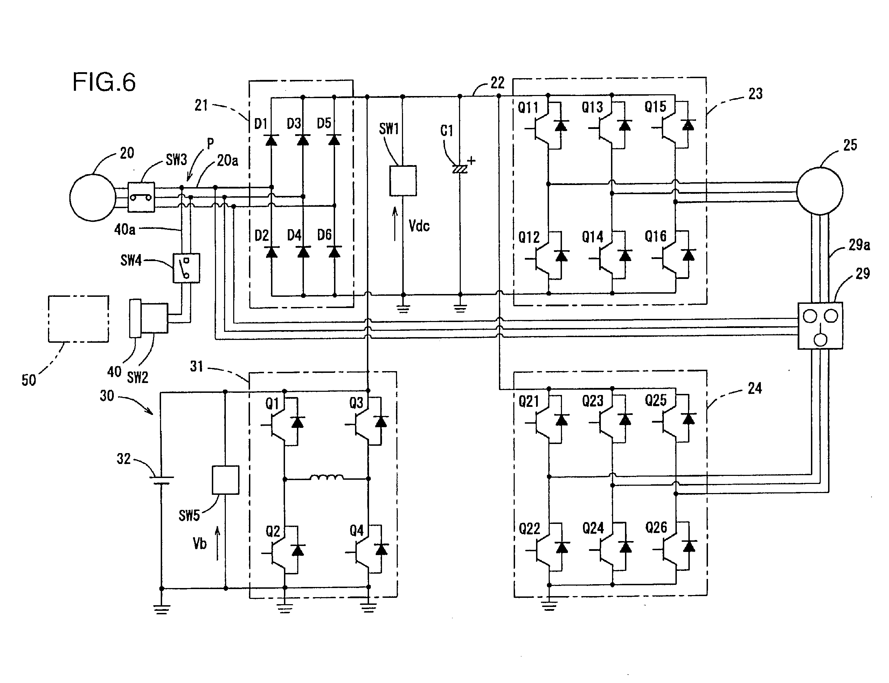

In the above process, if it is determined in Step S1 that the external power source 50 is not inserted into (connected to) the socket 40, based on a fact that the voltage of the external power source 50 is not detected by the external-power-source connection sensor SW2 (NO in Step S1), the control routine advances to Step S5. In Step S5, the switch control section 114 turns on the first switch SW3, as shown in FIG. 6.

In this state, the motor/generator 20 is connected to the diode rectifier 21. Thus, in conjunction with driving of the engine 10, an output of the motor/generator 20 can be supplied to the motor 25.

As above, in the operation of charging the battery 32 using the external power source 50, the node P is disconnected from the motor/generator 20 by the first switch SW3. This makes it possible to prevent a current fed from the external power source 50 from being supplied to the motor/generator 20 during the charging of the battery 32 so as to efficiently charge the battery 32.

When the external power source 50 is connected to the socket 40, the first switch SW3 is turned off in Step S2. Thus, the external power source 50 can be reliably disconnected from the motor/generator 20 until the charging of the battery 32 is initiated.

Then, the second switch SW4 is turned on to connect between the external power source 50 and the diode rectifier 21, after completion of Step S2. This makes it possible to more reliably prevent the current fed from the external power source 50 from being supplied to the motor/generator 20 during the charging of the battery 32.

The bidirectional step-up/down converter 31 is connected between the socket 40 (the power supply line 40a or the node P) and the battery 32. Thus, the battery 32 can be charged irrespective of the magnitude relationship between the voltage value Vdc and the voltage value Vb.

Particularly, in the hybrid vehicle as in the first embodiment, the magnitude relationship between the voltage value Vdc and the voltage value Vb is not always constant, because an amount of electric power in the battery 32 consumed until just before the charging of the battery 32, i.e., an amount of remaining electric power in the battery 32, varies depending on a vehicle-running time or the like. Thus, the battery-charging system according to the first embodiment designed to charge the battery irrespective of the magnitude relationship between the voltage value Vdc and the voltage value Vb, using the bidirectional step-up/down converter 31, has a significant effect in a hybrid vehicle.

### [SECOND EMBODIMENT]

In the first embodiment illustrated in FIGS. 1 to 6, the first and second switches SW3, SW4 are interposed, respectively, in the power supply lines 20a, 40a, and the first and second switches SW3, SW4 are turned off and turned on, respectively, when the external power source 50 is connected to the power supply line 40a. However, the present invention is not limited to this configuration.

In a hybrid vehicle, an operation of charging the battery 32 by connecting the external power source 50 is typically performed when the vehicle is not running, for example, in a parked state. Thus, the battery-charging system may be configured such that the switch SW3 is controllably switched based on a determination whether the vehicle is in a parked state, to allow the switch SW3 to be maintained in its OFF state during parking of the vehicle.

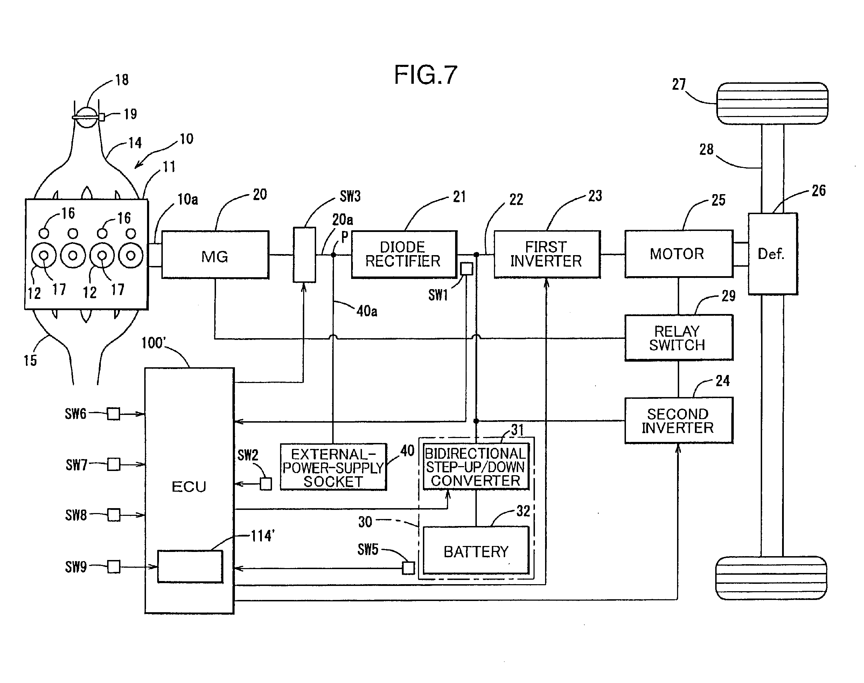

FIG. 7 is a schematic block diagram showing a hybrid vehicle equipped with a battery-charging system according to a second embodiment of the present invention. As shown in FIG. 7, in the second embodiment, only the switch SW3 adapted to selectively connect and disconnect a connection between the motor/generator 20 and the external power source 50 (power supply line 40a) is provided, and the switch SW4 adapted to selectively connect and disconnect a connection between the external power source 50 and the diode rectifier 21 is omitted.

A control unit 100' of the battery-charging system according to a second embodiment includes a switch control section 114' operable, based on a detection signal from the ignition switch ON/OFF sensor SW9, to control the ON/OFF operation of the switch SW3.

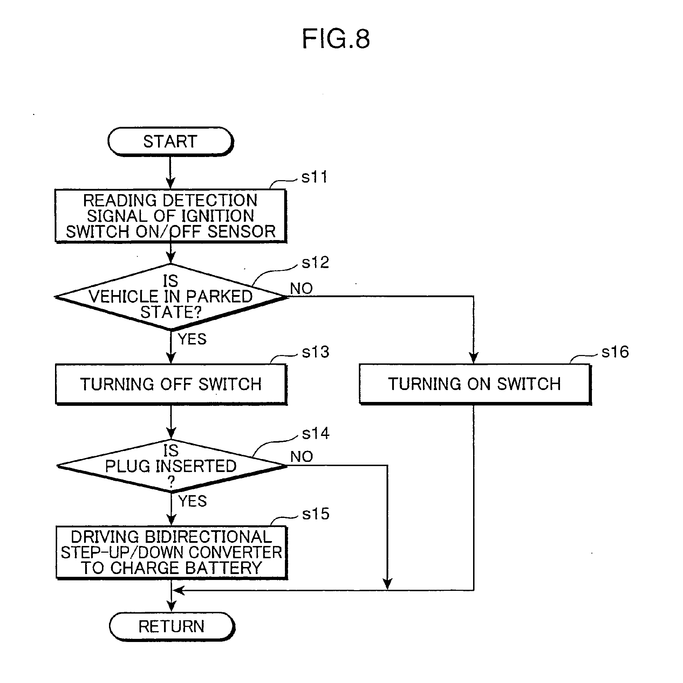

With reference to FIG. 8, a control process of charging the battery 32 will be described below. FIG. 8 is a flowchart showing one example of the control process of charging the battery 32. Firstly, the switch control section 114' reads a detection signal from the ignition ON/OFF sensor SW9 (Step S11).

If the detection signal from the ignition ON/OFF sensor SW9 indicates that an ignition switch is in an OFF state, the switch control section 114' determines that the vehicle is in a parked state (YES in Step S12), and the control routine advances to Step S13. In Step S13, the switch control section 114' turns off the switch SW3.

Then, the control routine advances to Step S14. In Step S14, the switch control section 114' determines whether a terminal (plug) of the external power source 50 is inserted into (connected to) the socket 40, using the external-power-source connection sensor SW2.

In Step S14, if the voltage of the external power source 50 is not detected by the external-power-source connection sensor SW2, and thereby the switch control section 114' determines that the external power source 50 is not inserted into (connected to) the socket 40 (NO in Step S14), the control routine is returned to a main routine. If the switch control section 114' determines that the external power source 50 is inserted into (connected to) the socket 40 (YES in Step S14), the control routine advances to Step S15.

In Step S15, based on the magnitude relationship between the voltage value Vdc and the voltage value Vb, the battery control section 112 controls the bidirectional step-up/down converter 31 to appropriately step up or down a direct-current voltage resulting from rectifying the alternating current fed from the external power source 50 by the diode rectifier 21, in the same manner as that in the first embodiment.

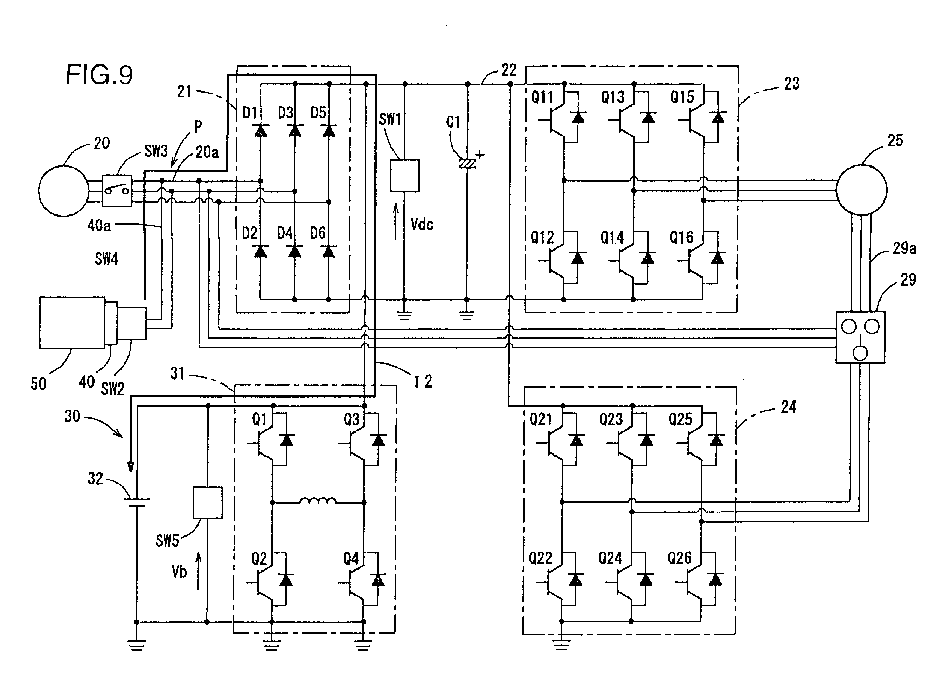

Thus, the current fed from the external power source 50 is supplied to the battery 32 via the diode rectifier 21 and the bidirectional step-up/down converter 31, as indicated by the arrowed line 12 in FIG. 9, to perform a charging operation. After completion of the charging operation, the control routine is returned to the main routine.

In Step S12, based on the detection signal from the ignition ON/OFF sensor SW9, the switch control section 114' determines that the ignition switch is not in the OFF state (in its ON state) (NO in Step S12), and the control routine advances to Step S16. In Step S16, the switch control section 114' turns on the switch SW3.

In this state, the motor/generator 20 is connected to the diode rectifier 21. Thus, in conjunction with driving of the engine 10, an output of the motor/generator 20 can be supplied to the motor 25.

As above, in the second embodiment, the switch SW3 is turned of in advance, in a parked state of a hybrid vehicle when charging of the battery 32 using the external power source 50 is highly likely to be performed. Thus, the charging of the battery 32 can be initiated immediately after the external power source 50 is connected to the socket 40.

### [THIRD EMBODIMENT]

In the second embodiment, the determination on whether the vehicle is in the parked state is performed based on a detection signal from the ignition switch ON/OFF sensor SW9, and the switch SW is controllably switched based on a result of the determination. However, the present invention is not limited to this manner. For example, in place of the ignition switch ON/OFF sensor SW9, the parked state of the vehicle may be determined based on detecting a state when a shift lever is positioned at a parking (P) range.

### [FOURTH EMBODIMENT]

In the above embodiments, the second inverter 24 is provided to allow the motor/generator 20 to be controllably driven as a motor during start-up of the engine 10. However, it is not always essential to provide the second inverter 24.

For example, a small-size engine-starting inverter 224 may be connected to the battery 32, wherein, during start-up of the engine 10, a driving current is supplied from the battery 32 to the motor/generator 20 through the small-size engine-starting inverter 224. Alternatively, a single-purpose starter-motor different from the motor/generator 20 may be provided separately.

### [FIFTH EMBODIMENT]

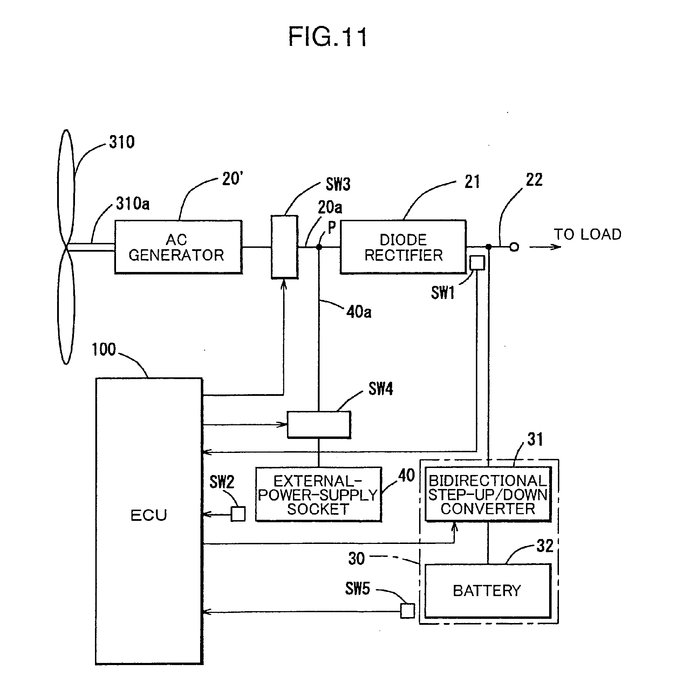

Although each of the above embodiments has been described based on one example where the battery-charging system of the present invention is applied to a hybrid vehicle, an application of the present invention is not limited to such a hybrid vehicle, but may be applied to any other suitable apparatus or system which allows the battery-charging system of the present invention to be configured such that an alternating current output from at least an AC generator is rectified into a direct current by a diode rectifier, and a battery is charged using an external power source through the diode rectifier. In FIG. 11, a wind turbine generator system equipped with a battery-charging system according to a fourth embodiment of the present invention comprises a wind turbine 310, and an AC generator 20' having a wind turbine rotor (not shown) connected to a shaft 310 of the wind turbine 310 and adapted to be integrally rotated together with the wind turbine 310, wherein the AC generator 20' is connected to the diode rectifier 21.

In the wind turbine generator system illustrated in FIG. 11, a battery 32 is provided to allow electric power to be supplied to a load (target to be driven) continuously and stably even under a condition that sufficient electric energy cannot be extracted due to slight or no wind. In the fourth embodiment, the battery-charging system is configured to allow the external power source 50 to be connected thereto when the external power source 50 can be used, so as to charge the battery 32 using the external power source 50, in the same manner as that in the first to third embodiments.

In this case, based on the use of the diode rectifier 21, power generation efficiency of the wind turbine generator system can be enhanced, and, during an operation of charging the battery 32 using the external power source 50, battery-charging efficiency can also be enhanced.

In the second to fourth embodiments, the same element or component as that in the first embodiment is defined by a common reference numeral or code, and its detailed description is omitted.

As for a correspondence between each element as set forth in the appended claims and each element or component in the above embodiments, an alternating-current generator; a connection member; connection switching means (first connection switching means); and control means; second connection switching means, in the appended claims, correspond, respectively, to the motor/generator 20 (AC generator 20'); a combination of the external-power-source socket power supply line 40a and the node P; the first switch SW3; the switch control section 114 operable to execute Steps S2, S3, S5 (switch control section 114 operable to execute Steps S13, S16); and the second switch SW4, in the above embodiments. However, the present invention is not limited to such elements or components in the above embodiments, and various modifications and changes may be made therein.

The present invention can be summarized as follows.

According to a first aspect of the present invention, there is provided a battery-charging method which comprises the steps of: forming an electric circuit which includes: an alternating-current generator operable to output an alternating current; a diode rectifier operable to rectify the alternating current output from the alternating-current generator into a direct current by a diode; and a battery which is chargeable using an output of the alternating-current generator, wherein the alternating-current generator, the diode rectifier and the battery are serially connected in this order; and supplying an alternating current fed from the external power source, between the alternating-current generator and the diode rectifier.

In the battery-charging method of the present invention, an alternating current fed from the external power source is supplied between the alternating-current generator and the diode rectifier. Thus, the diode rectifier for rectifying an alternating current output from the alternating-current generator can be additionally used for rectifying the alternating current fed from the external power source to convert the alternating current to a direct current.

This makes it possible to charge the battery using the external power source without increasing the number of components only for charging of the battery, and effectively improve battery charging efficiency based on the use of the diode rectifier.

Preferably, in the battery-charging method of the present invention, the electric circuit further includes an inverter connected between the diode rectifier and said battery, and a motor connected to the inverter.

Preferably, the battery-charging method of the present invention comprises the step of, at least during charging of the battery using the external power source, disconnecting between the alternating-current generator, and a connection member for connection with the external power source and being connected between the alternating-current generator and the diode rectifier.

According to this feature, the connection member is disconnected from the alternating-current generator during charging of the battery using the external power source. This makes it possible to prevent a current from the external power source from being supplied to the alternating-current generator so as to efficiently charge the battery.

Preferably, in the above battery-charging method, the step of disconnecting between the alternating-current generator and the connection member is executed when the external power source is connected to the connection member, wherein the alternating-current generator and the connection member are connected when the external power source is disconnected from the connection member.

According to this feature, the step of disconnecting between the alternating-current generator and the connection member is executed when the external power source is connected to the connection member. This makes it possible to reliably disconnect a connection between the alternating-current generator and the external power source before the charging of the battery is initiated.

Preferably, the above battery-charging method comprises the step of, after the step of disconnecting between the alternating-current generator and the connection member, connecting between the external power source and the diode rectifier.

This makes it possible to more reliably prevent the current fed from the external power source from being supplied to the alternating-current generator during the charging of the battery.

When the above battery-charging method is implemented in a vehicle equipped with the electric circuit and adapted to be driven by the motor, it is preferable that the step of disconnecting between the alternating-current generator and the connection member is continuously executed during parking of the vehicle.

According to this feature, the connection member is disconnected from the alternating-current generator in a parked state of the vehicle when charging of the battery using the external power source is highly likely to be performed. Thus, the charging of the battery can be initiated immediately after the external power source is connected to the connection member.

Preferably, the battery-charging method of the present invention comprises the step of charging the battery while stepping up or down a direct-current voltage resulting from rectifying the alternating current fed from the external power source by the diode rectifier.

This makes it possible to charge the battery irrespective of a magnitude relationship between a voltage value of the battery, and a voltage value of a direct current resulting from rectifying an alternating current fed from the external current source by the diode rectifier.

The battery-charging method of the present invention may be implemented in a wind turbine generator system equipped with the electric circuit and adapted to convert wind energy to electric energy by the alternating-current generator.

In this case, in the wind turbine generator system where a battery is provided to allow electric power to be supplied to a load (target to be driven) continuously and stably even under a condition that sufficient electric energy cannot be extracted due to slight or no wind, charging efficiency during charging of the battery using the external power source can be improved.

According to a second aspect of the present invention, there is provided a battery-charging apparatus which comprises: an electric circuit including an alternating-current generator operable to output an alternating current, a diode rectifier operable to rectify the alternating current output from the alternating-current generator into a direct current by a diode, and a battery which is chargeable using an output of the alternating-current generator, and an external power source; and a connection member for connection with the external power source and being connected between the alternating-current generator and the diode rectifier.

In this battery-charging apparatus of the present invention, an alternating current fed from the external power source is supplied between the alternating-current generator and the diode rectifier. Thus, the diode rectifier for rectifying an alternating current output from the alternating-current generator can be additionally used for rectifying the alternating current fed from the external power source to convert the alternating current to a direct current.

This makes it possible to charge the battery using the external power source without increasing the number of components only for charging of the battery, and effectively improve battery charging efficiency based on the use of the diode rectifier.

Preferably, in the battery-charging apparatus of the present invention, the electric circuit further includes an inverter operable to convert a direct current to an alternating current; and a motor adapted to be driven by the alternating current supplied from the inverter thereto, wherein the inverter is connected between the diode rectifier and the battery, and the motor is connected to the inverter.

Preferably, the above battery-charging apparatus comprises: connection switching means interposed between the connection member and the alternating-current generator; and control means operable, at least during charging of the battery using the external power source, to control the connection switching means to disconnect a connection between the connection member and the alternating-current generator.

According to this feature, the connection switching means can be controlled to prevent a current from the external power source from being supplied to the alternating-current generator during charging of the battery so as to efficiently charge the battery.

Preferably, in the above battery-charging apparatus, the control means is operable, when the external power source is connected to the connection member, to control the connection switching means to disconnect a connection between the connection member and the alternating-current generator, and, when the connection member and the external power source are disconnected from each other, to control the connection switching means to connect the alternating-current generator and the connection member.

According to this feature, the connection switching means can be controlled to reliably disconnect a connection between the alternating-current generator and the external power source before the charging of the battery is initiated.

Preferably, the above battery-charging apparatus comprises second connection switching means adapted to selectively connect and disconnect a connection between the external power source and the diode rectifier, wherein the control means is operable, after the operation of controlling the first connection switching means interposed between the connection member and the alternating-current generator to disconnect a connection between the connection member and the alternating-current generator, to control the second connection switching means to connect between the external power source and the diode rectifier.

According to this feature, the second connection switching means can be controlled to more reliably prevent a current from the external power source from being supplied to the alternating-current generator during charging of the battery.

When the above battery-charging apparatus is mounted on a vehicle adapted to be driven by the motor, it is preferable that the control means is operable, during parking of the vehicle, to control the connection switching means to continuously disconnect a connection between the connection member and the alternating-current generator.

According to this feature, the connection member is disconnected from the alternating-current generator in a parked state of the vehicle when charging of the battery using the external power source is highly likely to be performed. Thus, the charging of the battery can be initiated immediately after the external power source is connected to the connection member.

Preferably, the battery-charging apparatus of the present invention comprises a step-up/down converter operable to step up or down a direct-current voltage resulting from rectifying the alternating current fed from the external power source by the diode rectifier, the step-up/down converter being interposed between the connection member and the battery.

This makes it possible to charge the battery irrespective of a magnitude relationship between a voltage value of the battery, and a voltage value of a direct current resulting from rectifying an alternating current fed from the external current source by the diode rectifier.

This battery-charging apparatus of the present invention may be mounted on a wind turbine generator system adapted to convert wind energy to electric energy by the alternating-current generator.

In this case, in the wind turbine generator system where a battery is provided to allow electric power to be supplied to a load (target to be driven) continuously and stably even under a condition that sufficient electric energy cannot be extracted due to slight or no wind, charging efficiency during charging of the battery using the external power source can be improved.

As above, in the battery-charging method and apparatus of the present invention, the diode rectifier for rectifying an alternating current output from the alternating-current generator can be additionally used for rectifying the alternating current fed from the external power source to convert the alternating current to a direct current. This makes it possible to charge the battery using the external power source without increasing the number of components only for charging of the battery, and effectively improve battery charging efficiency based on the use of the diode rectifier.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## Claims

1. A battery-charging method comprising the steps of:
forming an electric circuit which includes:
an alternating-current generator (20) operable to output an alternating current;
a diode rectifier (21) operable to rectify the alternating current output from said alternating-current generator into a direct current by a diode; and
a battery (32) which is chargeable using an output of said alternating-current generator, and an external power source (50); wherein said alternating-current generator (20), said diode rectifier (21) and said battery (32) are serially connected in this order; and supplying an alternating current fed from said external power source (50), between said alternating-current generator (20) and said diode rectifier (21).

2. The battery-charging method according to claim 1, wherein said electric circuit further includes an inverter (22, 23, 224) connected between said diode rectifier (21) and said battery (32), and a motor (25) connected to said inverter.

3. The battery-charging method according to claim 2, further comprising the step of, at least during charging of said battery (32) using said external power source (50), disconnecting between said alternating-current generator (20), and a connection member (40, 40a, P) for said external power source (50) between said alternating-current generator (20) and said diode rectifier (21).

4. The battery-charging method according to claim 3, wherein said step of disconnecting between said alternating-current generator (20) and said connection member (40, 40a, P) is executed when said external power source (50) is connected to said connection member (40), wherein said alternating-current generator (20) and said connection member (40, 40a, P) are connected when said external power source (50) is disconnected from said connection member (40, 40a, P).

5. The battery-charging method according to claim 4, further comprising the step of connecting between said external power source (50) and said diode rectifier (21) after said step of disconnecting between said alternating-current generator (20) and said connection member (40, 40a, P).

6. The battery-charging method according to claim 3, wherein said method is implemented in a vehicle equipped with said electric circuit and adapted to be driven by said motor (25), wherein said step of disconnecting between said alternating-current generator (20) and said connection member (40, 40a, P) is continuously executed during parking of said vehicle.

7. The battery-charging method according to any one of claims 1 to 6, further comprising the step of charging said battery (32) while stepping up or down a direct-current voltage resulting from rectifying the alternating current fed from said external power source (50) by said diode rectifier (21).

8. The battery-charging method according to claim 1, said method is implemented in a wind turbine generator system equipped with said electric circuit and adapted to convert wind energy to electric energy by said alternating-current generator (20').

9. A battery-charging apparatus comprising:
an electric circuit including an alternating-current generator (20) operable to output an alternating current, a diode rectifier (21) operable to rectify the alternating current output from said alternating-current generator (20) into a direct current by a diode, and a battery (32) which is chargeable using an output of said alternating-current generator, and an external power source; and
a connection member (40, 40a, P) for said external power source (50) between said alternating-current generator (20) and said diode rectifier (21).

10. The battery-charging apparatus according to claim 9, wherein said electric circuit further includes an inverter (23, 24, 224) operable to convert a direct current to an alternating current; and a motor (25) adapted to be driven by the alternating current supplied from said inverter thereto, wherein said inverter is connected between said diode rectifier (21) and said battery (32), and said motor (25) is connected to said inverter.

11. The battery-charging apparatus according to claim 10, wherein:
connection switching means (SW3) is interposed between said connection member (40, 40a, P) and said alternating-current generator (20); and
control means (114, 114') is operable, at least during charging of said battery (32) using said external power source (50), to control said connection switching means (SW3) to disconnect a connection between said connection member (40, 40a, P) and said alternating-current generator (20).

12. The battery-charging apparatus according to claim 11, wherein said control means (114, 114') is operable, when said external power source (50) is connected to said connection member (40, 40a, P), to control said connection switching means (SW3) to disconnect a connection between said connection member (40, 40a, P) and said alternating-current generator (20), and, when said connection member (40, 40a, P) and said external power source (50) are disconnected from each other, to control said connection switching means (SW3) to connect said alternating-current generator (20) and said connection member (40, 40a, P).

13. The battery-charging apparatus according to claim 12, further comprising second connection switching means (SW4) adapted to selectively connect and disconnect a connection between said external power source (50) and said diode rectifier (21), wherein said control means (114, 114') is operable, after said operation of controlling said connection switching means (SW3) interposed between said connection member (40, 40a, P) and said alternating-current generator (20) to disconnect a connection between said connection member (40, 40a, P) and said alternating-current generator (20), to control said second connection switching means (SW4) to connect between said external power source (50) and said diode rectifier (21).

14. The battery-charging apparatus according to claim 11, said apparatus is mounted on a vehicle adapted to be driven by said motor (25), wherein said control means (114, 114') is operable, during parking of said vehicle, to control said connection switching means (SW3) to continuously disconnect a connection between said connection member (40, 40a, P) and said alternating-current generator (20).

15. The battery-charging apparatus according to any one of claims 9 to 14, further comprising a step-up/down converter (31) operable to step up or down a direct-current voltage resulting from rectifying the alternating current fed from said external power source (50) by said diode rectifier (21), said step-up/down converter (31) being interposed between said connection member (40, 40a, P) and said battery (32).

16. The battery-charging apparatus according to claim 9, wherein said alternating-current generator (20) is connected to a rotor adapted to be rotated by means of wind, said alternating-current generator being operable to convert wind energy to electric energy.
